# FASCICULE DE BREVET EUROPEEN

(11) **EP 2 303 563 B1**
(45) Date de publication et mention de la délivrance du brevet: **10.10.2012**
(21) Numéro de dépôt: 09768899.8
(22) Date de dépôt: 03.06.2009
(51) Int. Cl.: B29C 73/16, B29C 73/20, B60C 1/00, B60C 19/12, C09K 3/10, C08L 9/06

(54) **COMPOSITION ELASTOMERE AUTO-OBTURANTE**
SELBSTDICHTENDE ELASTOMERZUSAMMENSETZUNG
SELF-SEALING ELASTOMER COMPOSITION

(30) Priorité: 24.06.2008 FR 0854154
(43) Date de publication de la demande: 06.04.2011
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: LESAGE, Pierre, F-63000 Clermont-Ferrand (FR); ABAD, Vincent, F-63400 Chamalières (FR)
(74) Mandataire: Ribière, Joel
(86) Numéro de dépôt international: PCT/EP2009/003949
(87) Numéro de publication internationale: WO 2009/156050

(56) Documents cités:
- EP-A- 1 714 802
- EP-B- 1 090 069

## Description

La présente invention est relative aux compositions auto-obturantes (*self-sealing*) et à leur utilisation comme couches anti-crevaison dans tout type d'objet « pneumatique », c'est-à-dire, par définition, tout objet qui prend sa forme utilisable quand on le gonfle d'air.

Elle se rapporte plus particulièrement à l'utilisation de telles compositions dans des objets pneumatiques, notamment dans des bandages pneumatiques, pour obturer d'éventuels trous dus à des perforations en service.

Depuis quelques années, en particulier, les manufacturiers de bandages pneumatiques consentent des efforts particulièrement importants afin de développer des solutions originales à un problème datant du début même de l'utilisation des roues chaussées de bandages pneumatiques de type gonflés, à savoir comment permettre au véhicule de poursuivre sa route malgré une perte importante ou totale de pression d'un ou plusieurs bandages pneumatiques. Pendant des décennies, la roue de secours fut considérée comme la solution unique et universelle. Puis, plus récemment, les avantages considérables liés à sa suppression éventuelle sont apparus. Le concept de "mobilité étendue" se développe. Les techniques associées permettent de rouler avec le même bandage pneumatique, en fonction de certaines limites à respecter, après une crevaison ou une chute de pression. Cela permet par exemple de se rendre à un point de dépannage sans devoir s'arrêter, dans des circonstances souvent hasardeuses, pour installer la roue de secours.

Des compositions auto-obturantes susceptibles de permettre d'atteindre un tel objectif, par définition aptes à assurer automatiquement, c'est-à-dire sans aucune intervention externe, l'étanchéité d'un bandage pneumatique en cas de perforation de ce dernier par un corps étranger tel qu'un clou, sont particulièrement difficiles à mettre au point.

Pour pouvoir être utilisable, une couche auto-obturante doit satisfaire à de nombreuses conditions de nature physique et chimique. Elle doit notamment être efficace dans une très large gamme de températures d'utilisation et ce pendant toute la durée de vie des bandages pneumatiques. Elle doit être capable d'obturer le trou lorsque l'objet perforant reste en place ; à l'expulsion de ce dernier, elle doit pouvoir combler le trou et rendre le bandage pneumatique étanche.

De nombreuses solutions ont été imaginées mais n'ont pu se développer dans les bandages pneumatiques pour véhicules notamment par manque de stabilité dans le temps ou d'efficacité dans des conditions extrêmes de température d'utilisation.

Pour contribuer à maintenir une bonne efficacité à haute température, le document US-A-4,113,799 (ou FR-A-2 318 042) a proposé comme couche auto-obturante une composition comportant une combinaison de caoutchoucs butyls de haute et basse masses moléculaires réticulés partiellement, en présence éventuellement d'une faible part d'élastomère thermoplastique styrénique. Pour une bonne efficacité d'obturation, ladite composition comporte de 55 à 70% en poids d'un agent tackifiant.

Le document US-A-4 228 839 a proposé comme couche auto-obturante pour pneumatique un mélange de caoutchouc contenant une première matière polymère qui se dégrade par irradiation, telle que du polyisobutylène, et une seconde matière polymère qui se réticule par irradiation, préférentiellement un caoutchouc butyl.

Le document US-A-4 426 468 a lui aussi proposé une composition auto-obturante pour pneumatique à base de caoutchouc butyl à très haute masse moléculaire, réticulé.

Un inconvénient connu des caoutchoucs butyls est qu'ils présentent des pertes hystérétiques importantes (niveau élevé de tan δ) sur un spectre large de température, inconvénient qui se répercute sur les compositions auto-obturantes elles-mêmes avec une forte augmentation de l'hystérèse et une pénalisation notable de la résistance au roulement des bandages pneumatiques.

Les Demanderesses ont constaté par ailleurs que ces compositions à base de caoutchouc butyl peuvent présenter en outre une efficacité insuffisante après l'expulsion ou le retrait différé d'un objet perforant resté en place pendant une longue période dans la structure du bandage pneumatique.

Le document EP-B1-1 090 069 a certes proposé quant à lui des compositions auto-obturantes dépourvues de caoutchouc butyl, dont la formulation spécifique comprend pour 100 parties en masse d'un élastomère thermoplastique à base de styrène, 80 à 140 parties d'un plastifiant liquide, 110 à 190 parties d'une résine tackifiante et de 2 à 20 parties d'un additif.

Une quantité importante de résine tackifiante, outre le coût industriel plus élevé qu'elle induit pour les pneumatiques, peut elle aussi pénaliser la résistance au roulement des pneumatiques en raison d'un risque de rigidification excessive de la composition auto-obturante.

Or, poursuivant leurs recherches, les Demanderesses ont découvert une composition auto-obturante de formulation notablement simplifiée, qui ne nécessite ni caoutchouc butyl ni l'emploi de résines tackifiantes, et présente dans un objet pneumatique une performance anti-crevaison améliorée par rapport aux compositions auto-obturantes de l'art antérieur. Comparativement aux compositions auto-obturantes usuelles, elle améliore notablement la vitesse d'obturation d'un trou lors du retrait, notamment différé, d'un objet perforant.

Ainsi, selon un premier objet, la présente invention concerne une composition auto-obturante, utilisable notamment comme couche anti-crevaison dans un objet pneumatique, comportant au moins (pce signifiant parties en poids pour cent parties d'élastomères) :
- au moins 30 pce d'un élastomère thermoplastique styrénique ("TPS") saturé ;
- au plus 70 pce d'un élastomère TPS insaturé ;
- plus de 200 pce d'une huile d'extension desdits élastomères.

L'invention concerne également un stratifié étanche à l'air et anti-crevaison, utilisable notamment dans un objet pneumatique, comportant au moins une première couche anti-crevaison comportant la composition auto-obturante de l'invention et une seconde couche étanche à l'air.

L'invention concerne particulièrement l'utilisation d'une telle composition auto-obturante ou d'un tel stratifié dans un objet pneumatique tel qu'un bandage pneumatique, particulièrement lorsque ladite composition ou ledit stratifié est disposé(e) sur la paroi interne dudit objet ou bandage pneumatique.

La présente invention concerne particulièrement l'utilisation de la composition auto-obturante ou du stratifié ci-dessus dans des bandages pneumatiques destinés à équiper des véhicules à moteur de type tourisme, SUV (*"Sport Utility Vehicles"*), deux roues (notamment vélos, motos), avions, comme des véhicules industriels choisis parmi camionnettes, "Poids-lourd" - c'est-à-dire métro, bus, engins de transport routier (camions, tracteurs, remorques), véhicules hors-la-route tels qu'engins agricoles ou de génie civil -, autres véhicules de transport ou de manutention.

L'invention concerne également en soi tout objet pneumatique, en particulier un bandage pneumatique, comportant une couche anti-crevaison ou un stratifié tels que décrits ci-dessus.

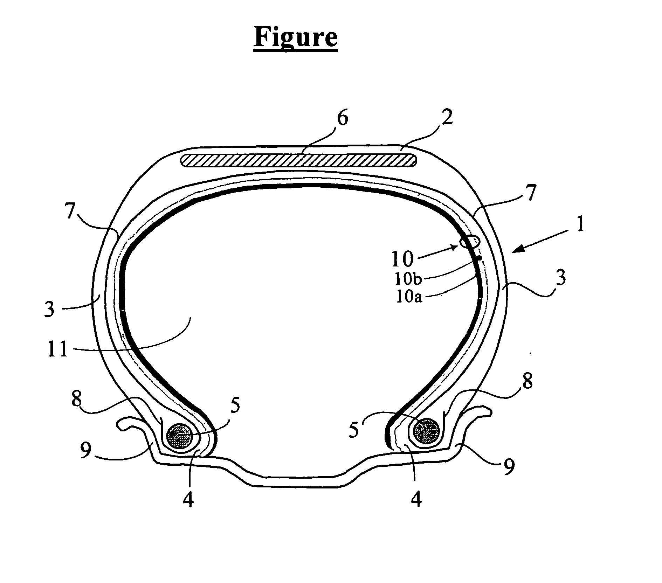

L'invention ainsi que ses avantages seront aisément compris à la lumière de la description et des exemples de réalisation qui suivent, ainsi que de la figure unique relative à ces exemples qui schématise en coupe radiale, un bandage pneumatique à armature de carcasse radiale utilisant une composition auto-obturante conformément à la présente invention.

### I. DESCRIPTION DETAILLEE DE L'INVENTION

Dans la présente description, sauf indication expresse différente, tous les pourcentages (%) indiqués sont des % en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

### I-1. Composition auto-obturante

La composition ou matière auto-obturante utilisée conformément à l'invention est une composition élastomère comportant au moins un élastomère TPS saturé à un taux d'au moins 30 pce (i.e., 30 pce ou plus), un élastomère TPS insaturé à un taux d'au plus 70 pce (i.e., 70 pce ou moins), et plus de 200 pce d'huile à titre d'huile d'extension desdits élastomères TPS (pce signifiant parties en poids pour cent parties d'élastomères).

### I-1-A. Elastomères thermoplastiques styréniques (saturés et insaturés)

Les élastomères thermoplastiques styréniques (en abrégé "TPS") sont des élastomères thermoplastiques se présentant sous la forme de copolymères blocs à base de styrène.

De structure intermédiaire entre polymères thermoplastiques et élastomères, ils sont constitués de manière connue de séquences rigides polystyrène reliées par des séquences souples élastomère, par exemple polybutadiène, polyisoprène ou poly(éthylène/butylène). Ce sont souvent des élastomères triblocs avec deux segments rigides reliés par un segment souple. Les segments rigides et souples peuvent être disposés linéairement, en étoile ou branchés. Ces élastomères TPS peuvent être aussi des élastomères diblocs avec un seul segment rigide relié à un segment souple. Typiquement, chacun de ces segments ou blocs contient au minimum plus de 5, généralement plus de 10 unités de base (par exemple unités styrène et unités isoprène pour un copolymère blocs styrène/ isoprène/ styrène).

La première caractéristique essentielle de la composition de l'invention est de comporter :
- au moins 30 pce (c'est-à-dire de 30 pce à moins de 100 pce), préférentiellement au moins 50 pce (c'est-à-dire de 50 pce à moins de 100 pce), d'un élastomère TPS saturé, ce dernier étant combiné à :
- au plus 70 pce (c'est-à-dire de plus de 0 pce à 70 pce), préférentiellement au plus 50 pce (c'est-à-dire de plus de 0 pce à 50 pce) d'un élastomère TPS insaturé.

En d'autres termes, le taux d'élastomère TPS saturé est compris dans une domaine de 30 pce minimum à moins de 100 pce, et le taux d'élastomère TPS insaturé (toujours présent dans la composition) est compris dans un domaine de plus de 0 pce à 70 pce maximum.

Dans la présente demande, on entend par définition et de manière bien connue :
- par élastomère TPS saturé, un élastomère TPS qui ne comporte aucune insaturation éthylénique (i.e., aucune double liaison carbone-carbone) ;
- par élastomère TPS insaturé, un élastomère TPS qui est pourvu d'insaturations éthyléniques, c'est-à-dire comporte des doubles liaisons carbone-carbone (conjuguées ou non).

De préférence, l'élastomère TPS saturé est choisi dans le groupe constitué par les copolymères blocs styrène/ éthylène/ butylène (SEB), styrène/ éthylène/ propylène (SEP), styrène/ éthylène/ éthylène/ propylène (SEEP), styrène/ éthylène/ butylène/ styrène (SEBS), styrène/ éthylène/ propylène/ styrène (SEPS), styrène/ éthylène/ éthylène/ propylène/ styrène (SEEPS) et les mélanges de ces copolymères.

Plus préférentiellement, ledit élastomère est choisi dans le groupe constitué par les copolymères SEBS, les copolymères SEPS et les mélanges de ces copolymères.

De préférence, l'élastomère TPS insaturé est choisi dans le groupe constitué par les copolymères blocs styrène/ butadiène (SB), styrène/ isoprène (SI), styrène/ butadiène/butylène (SBB), styrène/ butadiène/ isoprène (SBI), styrène/ butadiène/ styrène (SBS), styrène/ butadiène/ butylène/ styrène (SBBS), styrène/ isoprène/ styrène (SIS), styrène/butadiène/ isoprène/ styrène (SBIS) et les mélanges de ces copolymères. Plus préférentiellement, cet élastomère TPS insaturé est un copolymère du type triblocs choisi dans le groupe constitué par les copolymères blocs styrène/ butadiène/ styrène (SBS), styrène/ butadiène/ butylène/ styrène (SBBS), styrène/ isoprène/ styrène (SIS), styrène/butadiène/ isoprène/ styrène (SBIS) et les mélanges de ces copolymères.

Il doit être souligné que la présence de l'élastomère TPS insaturé dans la composition auto-obturante, aux taux préconisés ci-dessus, permet de faciliter l'adhésion de cette dernière à une matrice de polymère au moins en partie insaturé, par exemple à une couche d'élastomère diénique telle que caoutchouc butyl.

Pour une performance optimale en termes de propriétés auto-obturantes et propriétés adhésives, on préfère que le taux d'élastomère TPS saturé soit au moins égal à 60 pce, plus préférentiellement compris dans un domaine de 70 à 95 pce, et que le taux d'élastomère TPS insaturé soit au plus égal à 40 pce, de préférence compris dans un domaine de 5 à 30 pce.

Selon un autre mode de réalisation préférentiel de l'invention, le taux de styrène, dans chaque élastomère TPS, saturé et insaturé, est compris entre 5 et 50%. En dessous du minimum indiqué, le caractère thermoplastique de l'élastomère risque de diminuer de manière sensible tandis qu'au-dessus du maximum préconisé, l'élasticité de la composition peut être affectée. Pour ces raisons, le taux de styrène est plus préférentiellement compris entre 10 et 40%, en particulier entre 15 et 35%.

On préfère que la Tg (mesurée par DSC (*Differential Scanning Calorimetry*) selon ASTM D3418, 1999) de l'élastomère TPS saturé soit inférieure à -20°C, plus préférentiellement inférieure à -40°C. Une valeur de Tg supérieure à ces minima, impliquant une Tg plus élevée de la composition elle-même, peut diminuer les performances de la composition auto-obturante lors d'une utilisation à très basse température ; pour une telle utilisation, la Tg de l'élastomère TPS saturé est plus préférentiellement encore inférieure à -50°C.

La masse moléculaire moyenne en nombre (notée Mn) de chaque élastomère TPS, saturé et insaturé, est préférentiellement comprise entre 50 000 et 500 000 g/mol, plus préférentiellement comprise entre 75 000 et 450 000. En dessous des minima indiqués, la cohésion entre les chaînes d'élastomère TPS, en raison de sa dilution (quantité d'agent d'extension), risque d'être affectée ; d'autre part, une augmentation de la température d'usage risque d'affecter les propriétés mécaniques, notamment les propriétés à la rupture, avec pour conséquence une performance diminuée "à chaud". Par ailleurs, une masse Mn trop élevée peut être pénalisante pour la souplesse de la composition, aux taux d'huile d'extension préconisés. Ainsi, on a constaté qu'une valeur comprise dans un domaine de 250 000 à 400 000 était particulièrement bien adaptée, notamment à une utilisation de la composition auto-obturante dans un bandage pneumatique.

La masse moléculaire moyenne en nombre (Mn) des élastomères TPS est déterminée de manière connue, par chromatographie d'exclusion stérique (SEC). L'échantillon est préalablement solubilisé dans du tétrahydrofuranne à une concentration d'environ 1 g/l ; puis la solution est filtrée sur filtre de porosité 0,45 µm avant injection. L'appareillage utilisé est une chaîne chromatographique "WATERS alliance". Le solvant d'élution est le tétrahydrofuranne, le débit de 0,7 ml/min, la température du système de 35°C et la durée d'analyse de 90 min. On utilise un jeu de quatre colonnes WATERS en série, de dénominations commerciales "STYRAGEL" ("HMW7", "HMW6E" et deux "HT6E"). Le volume injecté de la solution de l'échantillon de polymère est de 100 µl. Le détecteur est un réfractomètre différentiel "WATERS 2410" et son logiciel associé d'exploitation des données chromatographiques est le système "WATERS MILLENIUM". Les masses molaires moyennes calculées sont relatives à une courbe d'étalonnage réalisée avec des étalons de polystyrène.

Les deux élastomères TPS précédemment décrits peuvent constituer la totalité de la matrice élastomère ou la majorité pondérale (i.e., pour plus de 50 %, préférentiellement pour plus de 70%) de cette dernière lorsqu'elle comporte un ou plusieurs autre(s) élastomère(s), thermoplastiques ou non, par exemple du type diéniques.

Selon un mode de réalisation préférentiel, ces deux élastomères TPS sont les seuls élastomères, et les seuls élastomères thermoplastiques présents dans la composition auto-obturante.

Des élastomères TPS saturés tels que par exemple SEPS ou SEBS, étendus notamment avec de forts taux d'huiles, sont bien connus et disponibles commercialement. A titre d'exemples de TPS saturés commerciaux sous forme étendue, on peut citer les produits commercialisés par la société Vita Thermoplastic Elastomers ou VTC ("VTC TPE group") sous la dénomination "Dryflex" (e.g. "Dryflex 967100") ou "Mediprene" (e.g. "Mediprene 500 000M"), ceux vendus par Multibase sous dénomination "Multiflex" (e.g. "Multiflex G00"). Ces produits, développés notamment pour des applications médicales, pharmaceutiques ou cosmétiques, peuvent être mis en oeuvre de façon classique pour des TPE, par extrusion ou moulage, par exemple à partir d'une matière première disponible sous la forme de billes ou de granulés. Bien entendu, les élastomères TPS saturés sont également disponibles sous forme non étendue. A titre d'exemples, on peut citer les élastomères de type SEBS ou SEPS commercialisés par la société Kraton sous la dénomination "Kraton G" (e.g. produits G 1650, G 1651, G 1654, G 1730) ou la société Kuraray sous la dénomination "Septon" (e.g. S2005, S2006, S8004, S8006).

Des élastomères TPS insaturés tels que par exemple SBS, SIS ou SBBS, sont également bien connus et disponibles commercialement, par exemple auprès de la société Kraton sous la dénomination "Kraton D" (e.g., produits D1161, D1118, D1116, D1163 pour des exemples d'élastomères SIS et SBS), auprès de la société Dynasol sous la dénomination "Calprene" (e.g., produits C405, C411, C412 pour des exemples d'élastomères SBS) ou encore auprès de la société Asahi sous la dénomination "Tuftec" (e.g., produit P1500 pour un exemple d'élastomère SBBS).

Les deux élastomères TPS précédemment décrits, utilisés en combinaison, se sont révélés capables, après ajout d'une huile d'extension au taux préconisé, de remplir la fonction d'une composition auto-obturante performante, comme cela est expliqué en détail dans la suite de l'exposé.

### I-1-B. Huile d'extension

Le deuxième constituant essentiel de la composition auto-obturante est une huile d'extension (ou huile plastifiante) utilisée à un taux très élevé, supérieur à 200 pce - soit plus de 200 parties en poids pour cent parties d'élastomère total (i.e., élastomères TPS saturés et insaturés, plus élastomère(s) complémentaire(s) le cas échéant) -, de préférence supérieur à 250 pce.

On peut utiliser toute huile d'extension, de préférence à caractère faiblement polaire, apte à étendre, plastifier des élastomères, notamment thermoplastiques.

A température ambiante (23°C), ces huiles, plus ou moins visqueuses, sont des liquides (c'est-à-dire, pour rappel, des substances ayant la capacité de prendre à terme la forme de leur contenant), par opposition notamment à des résines qui sont par nature solides.

De préférence, l'huile d'extension est choisie dans le groupe constitué par les huiles polyoléfiniques (c'est-à-dire issues de la polymérisation d'oléfines, monooléfines ou dioléfines), les huiles paraffiniques, les huiles naphténiques (à basse ou haute viscosité), les huiles aromatiques, les huiles minérales, et les mélanges de ces huiles.

Plus préférentiellement, l'huile d'extension est choisie dans le groupe constitué par les polybutènes, les huiles paraffiniques et les mélanges de ces huiles. On utilise tout particulièrement une huile polyisobutène, en particulier polyisobutylène ("PIB").

A titre d'exemples, des huiles polyisobutylène sont commercialisées notamment par la société Univar sous la dénomination "Dynapak Poly" (e.g. "Dynapak Poly 190"), par BASF sous les dénominations "Glissopal" (e.g. "Glissopal 1000") ou "Oppanol" (e.g. "Oppanol B12") ; des huiles paraffiniques sont commercialisées par exemple par Exxon sous la dénomination "Telura 618" ou par Repsol sous la dénomination "Extensol 51 ".

La masse moléculaire moyenne en nombre (Mn) de l'huile d'extension est préférentiellement comprise entre 200 et 30 000 g/mol, plus préférentiellement encore comprise entre 300 et 10 000 g/mol. Pour des masses Mn trop basses, il existe un risque de migration de l'huile à l'extérieur de la composition auto-obturante, tandis que des masses trop élevées peuvent entraîner une rigidification excessive de cette composition. Une masse Mn comprise entre 350 et 4 000 g/mol, en particulier entre 400 et 3 000 g/mol, s'est avérée constituer un excellent compromis pour les applications visées, en particulier pour une utilisation dans un bandage pneumatique.

La masse moléculaire moyenne en nombre (Mn) de l'huile d'extension est déterminée par SEC, l'échantillon étant préalablement solubilisé dans du tétrahydrofuranne à une concentration d'environ 1 g/l ; puis la solution est filtrée sur filtre de porosité 0,45µm avant injection. L'appareillage est la chaîne chromatographique "WATERS alliance". Le solvant d'élution est le tétrahydrofuranne, le débit de 1 ml/min, la température du système de 35°C et la durée d'analyse de 30 min. On utilise un jeu de deux colonnes "WATERS" de dénomination "STYRAGEL HT6E". Le volume injecté de la solution de l'échantillon de polymère est de 100 µl. Le détecteur est un réfractomètre différentiel "WATERS 2410" et son logiciel associé d'exploitation des données chromatographiques est le système "WATERS MILLENIUM". Les masses molaires moyennes calculées sont relatives à une courbe d'étalonnage réalisée avec des étalons de polystyrène.

L'homme du métier saura, à la lumière de la description et des exemples de réalisation qui suivent, ajuster la quantité d'huile d'extension en fonction des conditions particulières d'usage de la composition auto-obturante, notamment de l'objet pneumatique dans lequel elle est destinée à être utilisée.

On préfère que le taux d'huile d'extension soit compris entre 200 et 900 pce, plus préférentiellement entre 250 et 850 pce. En dessous du minimum indiqué, la composition auto-obturante risque de présenter une rigidité trop forte pour certaines applications tandis qu'au-delà du maximum préconisé, on s'expose à un risque de cohésion insuffisante de la composition. Pour cette raison, le taux d'huile d'extension est plus préférentiellement compris entre 300 et 800 pce, notamment pour une utilisation de la composition auto-obturante dans un bandage pneumatique.

### I-1-C. Additifs divers

Divers autres additifs peuvent être ajoutés, typiquement en faible quantité (préférentiellement à des taux inférieurs à 20 pce, plus préférentiellement inférieurs à 10 pce), comme par exemple des charges renforçantes tels que du noir de carbone, des charges non renforçantes ou inertes, des charges lamellaires, des agents de protection tels que des anti-UV, antioxydants ou anti-ozonants, divers autres stabilisants, des agents colorants avantageusement utilisables pour la coloration de la composition auto-obturante.

Bien que la composition auto-obturante, grâce à sa formulation spécifique, ne nécessite pas l'emploi de résine hydrocarbonée plastifiante ou tackifiante, l'invention s'applique également aux cas où une telle résine serait utilisée. De manière connue de l'homme du métier, la dénomination "résine" est réservée, par définition, à un composé qui est d'une part solide à température ambiante (23°C) (par opposition à un composé plastifiant liquide tel qu'une huile), d'autre part compatible (c'est-à-dire miscible au taux utilisé) avec la composition d'élastomère à laquelle il est destiné, de manière à agir comme un véritable agent diluant.

A titres d'exemples de telles résines hydrocarbonées, on peut citer celles choisies dans le groupe constitué par les résines d'homopolymère ou copolymère de cyclopentadiène (en abrégé CPD) ou dicyclopentadiène (en abrégé DCPD), les résines d'homopolymère ou copolymère terpène, les résines d'homopolymère ou copolymère de coupe C5, et les mélanges de ces résines.

Outre les élastomères précédemment décrits (TPS saturé, TPS insaturé et autres élastomères éventuels), la composition auto-obturante pourrait aussi comporter, toujours selon une fraction pondérale minoritaire par rapport aux élastomères TPS, des polymères autres que des élastomères, tels que par exemple des polymères thermoplastiques compatibles avec les élastomères TPS.

### 1-2. Utilisation de la composition auto-obturante comme couche anti-crevaison

La composition ou matière auto-obturante précédemment décrite est un composé solide (à 23°C) et élastique, qui se caractérise notamment, grâce à sa formulation spécifique, par une très haute souplesse et déformabilité.

Elle peut être utilisée comme couche anti-crevaison dans tout type d'objet "pneumatique", c'est-à-dire, par définition, tout objet qui prend sa forme utilisable quand on le gonfle d'air.

A titre d'exemples de tels objets pneumatiques, on peut citer les bateaux pneumatiques, les ballons ou balles utilisées pour le jeu ou le sport.

Elle est particulièrement bien adaptée à une utilisation comme couche anti-crevaison dans un objet pneumatique, produit fini ou semi-fini, en caoutchouc, tout particulièrement dans un bandage pneumatique pour véhicule automobile tel qu'un véhicule de type deux roues, tourisme ou industriel, ou non automobile tel que vélo.

Une telle couche anti-crevaison est préférentiellement disposée sur la paroi interne de l'objet pneumatique, la recouvrant totalement ou au moins en partie, mais elle peut être également intégrée complètement à sa structure interne.

L'épaisseur de la couche anti-crevaison est préférentiellement supérieure à 0,3 mm, plus préférentiellement comprise entre 0,5 mm et 10 mm (en particulier entre 1 et 5 mm).

On comprendra aisément que, selon les domaines d'application spécifiques, les dimensions et les pressions en jeu, le mode de mise en oeuvre de l'invention peut varier, la couche anti-crevaison comportant alors plusieurs gammes d'épaisseur préférentielles. Ainsi par exemple, pour des bandages pneumatiques de type tourisme, elle peut avoir une épaisseur d'au moins 0,5 mm, préférentiellement comprise entre 1 et 5 mm. Selon un autre exemple, pour des bandages pneumatiques de véhicules poids lourds ou agricole, l'épaisseur préférentielle peut se situer entre 1 et 6 mm. Selon un autre exemple, pour des bandages pneumatiques de véhicules dans le domaine du génie civil ou pour avions, l'épaisseur préférentielle peut se situer entre 2 et 10 mm. Enfin, selon un autre exemple, pour des bandages pneumatiques de vélo, l'épaisseur préférentielle peut se situer entre 0,4 et 2 mm.

La composition auto-obturante ici décrite a l'avantage de ne présenter, dans une très large gamme de températures d'utilisation des bandages pneumatiques, pratiquement aucune pénalisation en termes de résistance au roulement par rapport à un bandage pneumatique ne comportant pas une telle couche auto-obturante ; comparativement aux compositions auto-obturantes usuelles, elle améliore très notablement la vitesse d'obturation du trou, en particulier lors du retrait différé d'un objet perforant.

D'autre part, les compositions auto-obturantes usuelles présentent une aptitude importante au fluage. Lors du roulage des bandages pneumatiques, elles sont souvent chassées de la partie flanc de ces bandages sous l'effet des forces centrifuges et s'accumulent sous leur partie sommet. Ce n'est pas le cas pour les compositions préconisées par la présente invention qui peuvent être disposées dans toute la partie intérieure des bandages pneumatiques.

Bien entendu, l'invention s'applique aux cas où la composition auto-obturante précédemment décrite est utilisée dans un bandage ou tout autre objet pneumatique sans être nécessairement combinée à une couche étanche à l'air.

Toutefois, selon un mode particulier et préférentiel de réalisation de l'invention, la composition auto-obturante est associée à au moins une seconde couche étanche à l'air, pour constituer un produit stratifié multi-couches, auto-obturant et étanche à l'air, utilisable notamment comme paroi interne d'un objet pneumatique tel qu'un bandage pneumatique.

La seconde couche du stratifié peut comporter tout type de matériau susceptible de remplir la fonction de film étanche à l'air (ou plus généralement aux gaz), qu'il s'agisse par exemple d'un matériau métallique ou d'un matériau polymère. De préférence, cette couche étanche à l'air a une épaisseur supérieure à 0,05 mm, plus préférentiellement comprise entre 0,05 et 6 mm (par exemple de 0,1 à 2 mm).

Selon un mode de réalisation préférentiel, cette seconde couche étanche à l'air comporte une composition de caoutchouc butyl. Par caoutchouc butyl, doit être entendu de manière connue un copolymère d'isobutylène et d'isoprène (en abrégé IIR), ainsi que les versions halogénées, de préférence chlorées ou bromées, de ce type de copolymère. De préférence, le caoutchouc butyl est un caoutchouc butyl halogéné ou un coupage de butyls halogéné et non halogéné. Le caoutchouc butyl peut être utilisé seul ou en association avec un ou plusieurs autre(s) élastomère(s), notamment élastomères diénique(s) tels que par exemple du caoutchouc naturel ou un polyisoprène synthétique. La composition étanche à l'air comporte par ailleurs les divers additifs usuellement présents dans les couches étanches à l'air connues de l'homme du métier, tels que des charges renforçantes comme le noir de carbone, des charges lamellaires améliorant l'étanchéité (e.g. phyllosilicates tels que kaolin, talc, mica, argiles ou argiles modifiées (*"organo clays"*)), des agents de protection tels que antioxydants ou antiozonants, un système de réticulation (par exemple à base de soufre ou de peroxyde), divers agents de mise en oeuvre ou autres stabilisants.

Les deux couches du stratifié ci-dessus peuvent être assemblées par tout moyen approprié, par exemple par une simple opération de cuisson, de préférence sous pression (par exemple une dizaine de minutes à 150°C sous 16 bars).

### II. EXEMPLE DE REALISATION DE L'INVENTION

La composition auto-obturante et le stratifié multicouches décrits précédemment sont avantageusement utilisables dans les bandages pneumatiques de tous types de véhicules, en particulier dans les bandages pour véhicules tourisme susceptibles de rouler à très haute vitesse ou les bandages pour véhicules industriels tels que Poids-lourd susceptibles de rouler et fonctionner sous des conditions de températures internes particulièrement élevées.

A titre d'exemple, la figure unique annexée représente de manière très schématique (sans respect d'une échelle spécifique), une coupe radiale d'un bandage pneumatique conforme à l'invention.

Ce bandage pneumatique 1 comporte un sommet 2 renforcé par une armature de sommet ou ceinture 6, deux flancs 3 et deux bourrelets 4, chacun de ces bourrelets 4 étant renforcé avec une tringle 5. Le sommet 2 est surmonté d'une bande de roulement non représentée sur cette figure schématique. Une armature de carcasse 7 est enroulée autour des deux tringles 5 dans chaque bourrelet 4, le retournement 8 de cette armature 7 étant par exemple disposé vers l'extérieur du pneumatique 1 qui est ici représenté monté sur sa jante 9. L'armature de carcasse 7 est de manière connue en soi constituée d'au moins une nappe renforcée par des câbles dits "radiaux", par exemple textiles ou métalliques, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6).

Le bandage pneumatique 1 est caractérisé en ce que sa paroi interne comporte un stratifié multi-couches (10) comportant au moins deux couches (10a, 10b), auto-obturant grâce à sa première couche (10a) et étanche à l'air grâce à sa seconde couche (10b).

Conformément à un mode de réalisation préférentiel de l'invention, les deux couches (10a, 10b) couvrent substantiellement toute la paroi interne du bandage pneumatique, se prolongeant d'un flanc à l'autre, au moins jusqu'au niveau du crochet de jante lorsque le bandage pneumatique est en position montée. Selon d'autres modes de réalisation possibles, la couche 10a pourrait toutefois recouvrir uniquement une partie de la zone étanche à l'air (couche 10b), par exemple seulement la zone sommet du bandage pneumatique ou s'étendre au moins de la zone sommet jusqu'aux épaules ou jusqu'à mi-flanc (équateur) dudit bandage.

Selon un autre mode de réalisation préférentiel, le stratifié est disposé de telle manière que la première couche (10a) auto-obturante soit radialement la plus externe dans le bandage pneumatique, par rapport à l'autre couche (10b), comme schématisé sur la figure annexée. En d'autres termes, la couche (10a) auto-obturante recouvre la couche (10b) étanche à l'air du côté de la cavité interne 11 du bandage pneumatique 1. Un autre mode de réalisation possible est celui où cette couche (10a) est radialement la plus interne, disposée alors entre la couche étanche (10b) et le reste de la structure du bandage 1.

Dans cet exemple, la couche 10b (d'épaisseur 0,7 à 0,8 mm) est à base de caoutchouc butyl, présente une formulation conventionnelle pour une "gomme intérieure" (*"inner liner"*) qui définit usuellement, dans un bandage pneumatique conventionnel, la face radialement interne dudit bandage destinée à protéger l'armature de carcasse de la diffusion d'air provenant de l'espace intérieur au bandage. Cette couche 10b étanche à l'air permet donc le gonflement et le maintien sous pression du bandage 1 ; ses propriétés d'étanchéité lui permettent de garantir un taux de perte de pression relativement faible, permettant de maintenir le bandage gonflé, en état de fonctionnement normal, pendant une durée suffisante, normalement de plusieurs semaines ou plusieurs mois.

La couche 10a est quant à elle constituée d'une composition auto-obturante comportant les trois constituants essentiels que sont un élastomère saturé SEBS ("G1654" de la société Kraton ; avec un taux de styrène d'environ 30%, une Tg proche de -60°C et une valeur Mn de l'ordre de 150 000 g/mol) à un taux pondéral de 75 pce, un élastomère TPS insaturé SBS ("D1118" de la société Kraton) à un taux pondéral de 25 pce, et enfin une huile d'extension polyisobutylène ("Dynapak 190" de la société Univar - Mn de l'ordre de 1000 g/mol) à un taux pondéral d'environ 400 pce.

La composition auto-obturante ci-dessus a été préparée comme suit. Le mélange des trois constituants (SEBS, SBS et huile) a été réalisé de manière conventionnelle, à l'aide d'une extrudeuse bi-vis (L/D = 40), à une température typiquement supérieure à la température de fusion de la composition (environ 190°C). L'extrudeuse utilisée comportait deux alimentations (trémies) différentes (SEBS d'une part, SBS d'autre part) et une pompe d'injection liquide sous pression pour l'huile d'extension polyisobutylène ; elle était pourvue d'une filière permettant d'extruder le produit aux dimensions souhaitées.

La couche 10a, disposée donc entre la couche 10b et la cavité 11 du pneumatique, permet de procurer au pneumatique une protection efficace contre les pertes de pression dues aux perforations accidentelles, en permettant l'obturation automatique de ces perforations.

Si un corps étranger tel qu'un clou traverse la structure de l'objet pneumatique, par exemple une paroi telle qu'un flanc 3 ou le sommet 6 du bandage pneumatique 1, la composition servant de couche auto-obturante subit plusieurs contraintes. En réaction à ces contraintes, et grâce à ses propriétés avantageuses de déformabilité et d'élasticité, ladite composition crée une zone de contact étanche tout autour du corps. Peu importe que le contour ou profil de ce dernier soit uniforme ou régulier, la souplesse de la composition auto-obturante permet à cette dernière de s'immiscer dans des ouvertures de taille minime. Cette interaction entre la composition auto-obturante et le corps étranger confère une étanchéité à la zone affectée par ce dernier.

En cas de retrait, accidentel ou volontaire, du corps étranger, une perforation reste : celle-ci est susceptible de créer une fuite plus ou moins importante, en fonction de sa taille. La composition auto-obturante, soumise à l'effet de la pression hydrostatique, est suffisamment souple et déformable pour obturer, en se déformant, la perforation, empêchant la fuite de gaz de gonflage. Dans le cas d'un bandage pneumatique notamment, il s'est avéré que la souplesse de la composition auto-obturante permettait de supporter sans problème les efforts des parois environnantes, même lors des phases de déformations du bandage pneumatique chargé et en roulage.

Le pneumatique pourvu de sa couche anti-crevaison (10a) tel que décrit ci-dessus peut être réalisé avantageusement avant vulcanisation (ou cuisson). La composition auto-obturante est simplement appliquée de façon conventionnelle à l'endroit souhaité, pour formation de la couche 10a. La vulcanisation est ensuite effectuée classiquement. Les élastomères TPS supportent bien les contraintes liées à l'étape de vulcanisation.

Une variante de fabrication avantageuse, pour l'homme du métier des bandages pneumatiques, consistera par exemple au cours d'une première étape, à déposer à plat la composition auto-obturante directement sur un tambour de confection, sous la forme d'une couche (*"skim"*) d'épaisseur adaptée (par exemple 2 à 6 mm), avant de recouvrir cette dernière avec la couche étanche à l'air puis le reste de la structure du bandage pneumatique, selon des techniques de fabrication bien connues de l'homme du métier.

## Revendications

1. Composition élastomère thermoplastique auto-obturante, utilisable notamment comme couche anti-crevaison dans un objet pneumatique, comportant au moins, pce signifiant parties en poids pour cent parties d'élastomères :
- au moins 30 pce d'un élastomère thermoplastique styrénique, en abrégé "TPS" saturé ;
- au plus 70 pce d'un élastomère TPS insaturé ;
- plus de 200 pce d'une huile d'extension desdits élastomères.

2. Composition selon la revendication 1, dans laquelle le taux d'élastomère TPS saturé est d'au moins 50 pce et le taux d'élastomère TPS insaturé est d'au plus 50 pce.

3. Composition selon la revendication 1 ou 2, dans laquelle l'élastomère TPS saturé est choisi dans le groupe constitué par les copolymères styrène/ éthylène/utylène ,en abégé SEB, styrène/ éthylène/ propylèn,en abégé SEP, styrène/ éthylène/ éthylène/ propylèn ,en abégé, SEEP, styrène/éthylène/ butylène/ styrène ,en abégé SEBS, styrène/ éthylène/ propylène/ styrène ,en abégé SEPS, styrène/éthylène/ éthylène/ propylène/ styrène ,en abégé SEEPS et les mélanges de ces copolymères.

4. Composition selon la revendication 3, dans laquelle l'élastomère TPS saturé est choisi dans le groupe constitué par les copolymères SEBS, les copolymères SEPS et les mélanges de ces copolymères.

5. Composition selon l'une quelconque des revendications 1 à 4, dans laquelle l'élastomère TPS insaturé est choisi dans le groupe constitué par les coplymères blocs styrène/ butadiène,en abégé SB, styrène/ isoprène ,en abégé SI, styrène/butadiène/ butylène,en abégé SBB, styrène/butadiène/ isoprène ,en abégé SBI, styrène/ butadiène/ styréne ,en abégé SBS, styrène/ butadiène/ butylène/styrène ,en abégé SBBS, styrène/ isoprène/ styrène ,en abégé SIS, styrène/ butadiène/ isoprène/ styrèn ,en abégé sBIS styrène ,en abégé SBBS, styrène/ isoprène/ styrène ,en abégé, SIS, styrène/ butadiène/ isoprène/ styrène ,en abégé SBIS et les mélanges de ces copolymères.

6. Composition selon l'une quelconque des revendications 1 à 5, dans laquelle chaque élastomère TPS, saturé et insaturé, comprend entre 5 et 50% en masse de styrène.

7. Composition selon l'une quelconque des revendications 1 à 6, dans laquelle l'huile d'extension est choisie dans le groupe constitué par les huiles polyoléfiniques, les huiles paraffiniques, les huiles naphténiques, les huiles aromatiques, les huiles minérales, et les mélanges de ces huiles

8. Composition selon la revendication 7, dans laquelle l'huile d'extension est une huile polyisobutylène.

9. Composition selon l'une quelconque des revendications 1 à 8, dans laquelle le taux d'huile d'extension est compris entre 200 et 900 pce.

10. Composition selon l'une quelconque des revendications 1 à 9, dans laquelle le taux d'élastomère TPS saturé est au moins égal à 60 pce, de préférence compris dans un domaine de 70 à 95 pce, et le taux d'élastomère TPS insaturé est au plus égal à 40 pce, de préférence compris dans un domaine de 5 à 30 pce.

11. Utilisation d'une composition selon l'une quelconque des revendications 1 à 10, comme couche anti-crevaison dans un objet pneumatique.

12. Stratifié multicouches étanche à l'air et anti-crevaison, utilisable notamment dans un objet pneumatique, comportant au moins :
- une première couche anti-crevaison comportant la composition élastomère auto-obturante définie dans l'une quelconque des revendications 1 à 10 ;
- une seconde couche étanche à l'air.

13. Stratifié selon la revendication 12, dans lequel la couche étanche à l'air comporte une composition de caoutchouc butyl.

14. Objet pneumatique comportant une composition auto-obturante ou un stratifié étanche à l'air et anti-crevaison selon l'une quelconque des revendications précédentes.

15. Objet pneumatique selon la revendication 14, dans lequel la composition auto-obturante ou le stratifié étanche à l'air et anti-crevaison est déposé(e) sur la paroi interne de l'objet pneumatique.

## Claims

1. Self-sealing thermoplastic elastomer composition that can be used in particular as a puncture-resistant layer in an inflatable article, comprising at least the following, the abbreviation phr denoting parts by weight per hundred parts of rubber:
- at least 30 phr of a saturated, thermoplastic styrene, abbreviated TPS, elastomer;
- at most 70 phr of an unsaturated TPS elastomer; and
- more than 200 phr of an oil extender for said elastomers.

2. Composition according to Claim 1, in which the amount of saturated TPS elastomer is at least 50 phr and the amount of unsaturated TPS elastomer is at most 50 phr.

3. Composition according to Claim 1 or 2, in which the saturated TPS elastomer is chosen from the group formed by the copolymers styrene/ ethylene/ butylene, abbreviated SEB, styrene/ ethylene/ propylene, abbreviated SEP, styrene/ ethylene-ethylene/ propylene, abbreviated SEEP, styrene/ ethylene-butylene/ / styrene, abbreviated SEBS, styrene/ ethylene-propylene/ styrene, abbreviated SEPS, and styrene/ ethylene-ethylenepropylene/ styrene, abbreviated SEEPS and blends of these copolymers.

4. Composition according to Claim 3, in which the saturated TPS elastomer is chosen from the group formed by SEBS copolymers, SEPS copolymers and blends of these copolymers.

5. Composition according to any one of Claims 1 to 4, in which the unsaturated TPS elastomer is chosen from the group formed by the block copolymers styrene/butadiene, abbreviated SB, styrene/ isoprene, abbreviated SI, styrene/ butadiene/ butylene, abbreviated SBB, styrene/ butadiene/ isoprene, abbreviated SBI, styrene/ butadiene/ styrene, abbreviated SBS, styrene/ butadiene/ butylene/ styrene, abbreviated SBBS, and styrene/ isoprene/ styrene, abbreviated SIS, styrene/ butadiene/ isoprene/ styrene, abbreviated SBIS and blends of these copolymers.

6. Composition according to any one of Claims 1 to 5, in which each saturated and unsaturated TPS elastomer comprises between 5 and 50% styrene by weight.

7. Composition according to any one of Claims 1 to 6, in which the extender oil is chosen from the group formed by polyolefinic oils, paraffinic oils, naphthenic oils, aromatic oils, mineral oils and mixtures of these oils.

8. Composition according to Claim 7, in which the oil extender is a polyisobutylene oil.

9. Composition according to any one of Claims 1 to 8, in which the amount of extender oil is between 200 and 900 phr.

10. Composition according to any one of Claims 1 to 9, in which the amount of saturated TPS elastomer is at least equal to 60 phr, preferably in the range from 70 to 95 phr, and the amount of unsaturated TPS elastomer is at most equal to 40 phr, preferably in the range from 5 to 30 phr.

11. Use of a composition according to any one of Claims 1 to 10 as anti-puncture layer in an inflatable article.

12. Puncture-resistant airtight multilayer laminate that can be used in particular in an inflatable article, comprising at least:
- a puncture-resistant first layer comprising the self-sealing elastomer composition defined in any one of Claims 1 to 10; and
- an airtight second layer.

13. Laminate according to Claim 12, in which the airtight layer has a butyl rubber composition.

14. Inflatable article comprising a self-sealing composition or a puncture-resistant airtight laminate according to any one of the preceding claims.

15. Inflatable article according to Claim 14, in which the self-sealing composition or the puncture-resistant airtight laminate is deposited on the internal wall of the inflatable article.

## Patentansprüche

1. Selbstversiegelnde thermoplastische Elastomerzusammensetzung, die insbesondere als Anti-Pannen-Schicht in einem pneumatischen Objekt verwendet werden kann und mindestens Folgendes umfasst, wobei phe Gewichtsteile pro hundert Teile Elastomere bedeutet:
- mindestens 30 phe eines gesättigten thermoplastischen Styrol-Elastomers, kurz TPS-Elastomers;
- höchstens 70 phe eines ungesättigten TPS-Elastomers;
- mehr als 200 phe eines Strecköls für die Elastomere.

2. Zusammensetzung nach Anspruch 1, wobei der Gehalt an gesättigtem TPS-Elastomer mindestens 50 phe beträgt und der Gehalt an ungesättigtem TPS-Elastomer höchstens 50 phe beträgt.

3. Zusammensetzung nach Anspruch 1 oder 2, wobei das gesättigte TPS-Elastomer aus der Gruppe bestehend aus Styrol-Ethylen-Butylen-Copolymeren, kurz SEB, Styrol-Ethylen-Propylen-Copolymeren, kurz SEP, Styrol-Ethylen-Ethylen-Propylen-Copolymeren, kurz SEEP, Styrol-Ethylen-Butylen-Styrol-Copolymeren, kurz SEBS, Styrol-Ethylen-Propylen-Styrol-Copolymeren, kurz SEPS, Styrol-Ethylen-Ethylen-Propylen-Styrol-Copolymeren, kurz SEEPS, und Mischungen dieser Copolymere ausgewählt ist.

4. Zusammensetzung nach Anspruch 3, wobei das gesättigte TPS-Elastomer aus der Gruppe bestehend aus SEBS-Copolymeren, SEPS-Copolymeren und Mischungen dieser Copolymere ausgewählt ist.

5. Zusammensetzung nach einem der Ansprüche 1 bis 4, wobei das ungesättigte TPS-Elastomer aus der Gruppe bestehend aus Styrol-Butadien-Blockcopolymeren, kurz SB, Styrol-Isopren-Blockcopolymeren, kurz SI, Styrol-Butadien-Butylen-Blockcopolymeren, kurz SBB, Styrol-Butadien-Isopren-Blockcopolymeren, kurz SBI, Styrol-Butadien-Styrol-Blockcopolymeren, kurz SBS, Styrol-Butadien-Butylen-Styrol-Blockcopolymeren, kurz SBBS, Styrol-Isopren-Styrol-Blockcopolymeren, kurz SIS, Styrol-Butadien-Isopren-Styrol-Blockcopolymeren, kurz SBIS, und Mischungen dieser Copolymere ausgewählt ist.

6. Zusammensetzung nach einem der Ansprüche 1 bis 5, wobei jedes gesättigte und ungesättigte TPS-Elastomer zwischen 5 und 50 Gew.-% Styrol umfasst.

7. Zusammensetzung nach einem der Ansprüche 1 bis 6, wobei das Strecköl aus der Gruppe bestehend aus Polyolefinölen, Paraffinölen, naphthenischen Ölen, aromatischen Ölen, Mineralölen und Mischungen dieser Öle ausgewählt ist.

8. Zusammensetzung nach Anspruch 7, wobei es sich bei dem Strecköl um ein Polyisobutylenöl handelt.

9. Zusammensetzung nach einem der Ansprüche 1 bis 8, wobei der Streckölgehalt zwischen 200 und 900 phe liegt.

10. Zusammensetzung nach einem der Ansprüche 1 bis 9, wobei der Gehalt an gesättigtem TPS-Elastomer mindestens 60 phe beträgt und vorzugsweise in einem Bereich von 70 bis 95 phe liegt und der Gehalt an ungesättigtem TPS-Elastomer höchstens 40 phe beträgt und vorzugsweise in einem Bereich von 5 bis 30 phe liegt.

11. Verwendung einer Zusammensetzung nach einem der Ansprüche 1 bis 10 als Anti-Pannen-Schicht in einem pneumatischen Objekt.

12. Luftdichtes mehrschichtiges Anti-Pannen-Laminat, das insbesondere in einem pneumatischen Objekt verwendet werden kann, mit mindestens:
- einer ersten Anti-Pannen-Schicht, die die selbstversiegelnde Elastomerzusammensetzung gemäß einem der Ansprüche 1 bis 10 umfasst;
- einer zweiten luftdichten Schicht.

13. Laminat nach Anspruch 12, wobei die luftdichte Schicht eine Butylkautschukzusammensetzung umfasst.

14. Pneumatisches Objekt, umfassend eine Anti-Pannen-Zusammensetzung oder ein luftdichtes Anti-Pannen-Laminat gemäß einem der vorhergehenden Ansprüche.

15. Pneumatisches Objekt nach Anspruch 14, wobei die Anti-Pannen-Zusammensetzung bzw. das luftdichte Anti-Pannen-Laminat auf der Innenwand des pneumatischen Objekts abgeschieden ist.
